# EUROPEAN PATENT APPLICATION

(11) **EP 3 672 296 A1**
(43) Date of publication of application: **24.06.2020**
(21) Application number: 18382950.6
(22) Date of filing: 20.12.2018
(51) Int. Cl.: H04W 8/00, H04W 84/20

(54) **METHOD OF COMMUNICATION BY ADVERTISEMENT IN A NETWORK UNDER THE BLE PROTOCOL**

(71) Applicant: Baintex Technologies, S.L., 46980 Paterna (Valencia) (ES)
(72) Inventor: Esteve Esteve, José Miguel, 46980 Paterna (ES); Escriche Izquierdo, Carlos, 46980 Paterna (ES); Sendra Estrella, Alberto, 46980 Paterna (ES)
(74) Representative: Sahuquillo Huerta, Jesús

(57) **Abstract**

A method of communication by means of a BLE protocol broadcasted and filtered by MAC on a network under the BLE protocol with at least one node (A) and at least one second node (B) where the first node (A) broadcasts at least one data packet that includes at least one MAC address of at least one second node (B); and where when the second node (B) in an advertising channel scans that data packet broadcasted; it processes it if and only if the data packet received contains its own MAC address; and where the first node (A) broadcasts a first burst of data packets that include the MAC address of at least one second node (B), so that the second node (B) receives a first packet from the first node (A) and rejects the this from repeated and equal data packets; and where then the second node (B) broadcasts a second burst of identical data packets from among themselves that include the MAC address of the first node (A), ceasing to send packets to the second node (B) and, in turn, discarding the remaining packets received from the second node (B) and which are repeated; and where the second node (B) stops sending repeated data packets to the first node (A) when a pre-set time period for a timer ends.

## Description

A purpose of this invention is a method of communication by advertisement in a network under the BLE protocol (BLUETOOTH LOW ENERGY) with certain security characteristics and improved range or distance of communication.

### PRIOR ART

The BLUETOOTH LOW ENERGY Protocol (hereinafter simply BLE) is the main feature of version 4.0 of the BT spec core (Bluetooth). This version was introduced in June 2010 by the Bluetooth special interest group (SIG). Despite being based on BT Classic, the BLE protocol is a wireless technology designed to cover purposes not covered by its predecessor. The main purpose of this protocol is to design a radio standard with the least possible energy consumption, especially optimised to have a low cost, with low bandwidth, low power and equally low complexity.

The BLE protocol facilitates short-range communications between devices that do not require large data transfers, with the main idea of providing an efficient technology for monitoring and controlling applications where the amounts of data are typically very low, such as sending sensor values or control messages.

The BLE network topology is star-type. Master devices can have multiple link-layer connections with peripherals (*slave* devices) and simultaneously perform searches for other devices. On the other hand, a slave role device can only have one link-layer connection with a single master. In addition, a device can send data in *broadcast* mode, *advertising* events, without waiting for any connection. This allows you to send data to the devices in *scanning* state without having to establish the master-slave connection.

For the device management, connection and application interface BT's SIG defines a stack of protocols. The BLE protocol stack is divided into three basic parts: Controller, Host and Applications. The controller is the physical device that allows one to transmit and receive radio signals and to interpret them as data packets. It contains the physical layer, the Direct Test Mode, the Link Layer and the Host Controller Interface.

The host is the software stack that manages while two or more devices communicate with each other. No superior interface is defined for the Host; each operating system or environment has its own way of exposing host APIs (Application Programming Interface) for developers. This part of the stack contains a layer of logical link control and adaptation protocol, security manager, attribute protocol (att), generic attribute profile (GATT) and generic access profile (GAP) For each use case, applications use the software stack, which in turn uses the driver.

Bluetooth Low Energy shares some similarities with classic Bluetooth. Both use a 2.4 GHz band. Classic and BLE Bluetooth use the GFSK to 1Mbps modulation, but with different modulation indexes. Enhanced Data Rate (EDR) uses a completely different modulation from GFSK. The classic Bluetooth standard has 79 channels while BLE has 40, as indicated in table 1.1. The separation between channels is also different. Because of these two differences between BLE and classic Bluetooth, they are incompatible with each other, so they cannot communicate. However, there are Dual Mode devices that support both technologies by switching the modulation parameters and channels where they are being radiated.

These three Advertising channels are strategically located to avoid interference caused by other technologies that coexist in the same spectrum (IEEE 802 and ZigBee). In addition, in connection state, BLE uses the Frequency Hopping Spread Spectrum (FHSS) technique to reduce interference.

BLE uses a Gaussian modulation with frequency displacement. This uses two frequencies to identify the '1' or '0' bit. The Gaussian filter is used to soften transitions between frequencies and to reduce the widening spectrum caused by the ISI. The BLE specification [3] limits the maximum transmitted power to +10 dBm and the minimum to -20 dBm. The minimum received sensitivity required for BLE is -70 dBm, although most BLE devices have a sensitivity of less than -85 dBm.

The link layer is the layer responsible for the states of Advertising, Scanning and creating and maintaining connections. It is also responsible for the structure of the packets. The BLE protocol defines a series of operating modes. So in the Standby mode the device neither transmits nor receives. In general, this state is associated with a sleeper system to conserve energy.

In the advertising mode, the device that has the peripheral role enters the Advertising state in which it sends Advertising packets in the advertising channels. In this state it also hears any response (request) of the packets from the central device. This mode is one of the most critical to analyse from a power point of view because the peripheral device will take an Advertising time more or less, depending on the application. It should be taken into account that the transmission time affects energy consumption, therefore the Advertising range directly affects power consumption and battery life.

The Scanning mode refers to listening to Advertising packets sent through its channels. This mode is used to explore devices. In the initiating mode it is the state that the central device enters (master) before switching to connection status. The central device listens to the peripherals Advertising, but once it receives the Advertising of the desired peripheral, the central device must connect by sending the correct data. For the Slave, the Advertising state is also considered an initial state before the connection state. The connection state is the last state in which the Slave (peripheral) and Master (Central) can exchange data. They exchange data periodically through connection events.

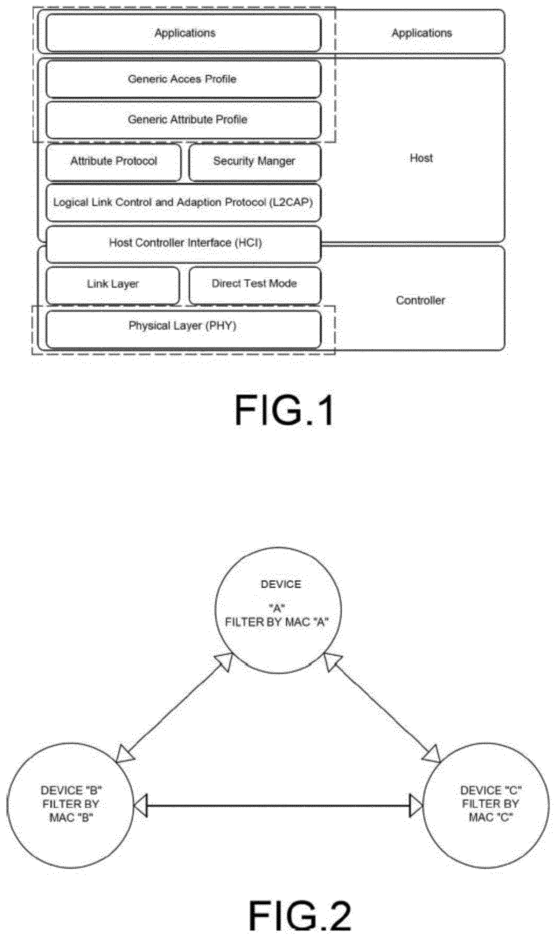

So far, the main elements that make up the BLE protocol have been described in a schematic way and are also shown in figure 1. In the state of the art there are examples of documents that describe some aspects of the BLE protocol, for example, documents US2018176776, US2018091932, US2017325161, or EP2999297.

In the communication networks under the BLE standard (BT 4.0) the devices are connected by -pairing-. Thus, two devices are paired, and a master-slave communication is established. Because it is a link communication, both devices must be at a relatively short distance (approximately 5 metres).

### BRIEF DESCRIPTION OF THE INVENTION

A purpose of this invention is a method of communication by advertisement on a network that is more secure and has a greater reach than those described in the state of the art. This purpose is achieved with the method of claim 1. In other claims dependent on it, particular and/or preferred realisations of the invention are shown.

More specifically, this invention develops a communication by advertisement in which a master device -node- sends a burst of repeated packets to a slave device - node. The slave node then sends a response using another burst of repeated data packets. When the broadcast node -broadcaster- receives the first data packet stops sending packets to the observer. Both master-slave nodes have a timer that stops the sending of packets if they don't receive any. Once a device -node- validates a data packet it can no longer be used again.

Thanks to this structure, it is possible to increase the maximum distance between devices not requiring the link between devices -nodes- of the network. This structure also uses packet filtering with its own MAC that improves performance in saturated environments. Finally, the packet-repeating structure prevents "man in the middle" attacks or packet reinjection attacks.

A connection requires a more stable signal quality, which is achieved by reducing the distance between devices When sending packets via advertisement These packets can be heard from farther away, and when the same packet is forwarded several times, the possibility of packet loss is minimized.

Throughout the description and claims the word "comprises" and its variants are not intended to exclude other technical characteristics, additives, components or steps. For experts in the field, other purposes, advantages and features of the invention will be gathered partly from the description and partly from practicing the invention. The following examples and drawings are provided as an illustration and are not intended to restrict this invention. Moreover, this invention covers all possible combinations of particular and preferred realisations indicated herein.

### BRIEF DESCRIPTION OF THE FIGURES

Below a series of drawings are briefly described that help to better understand the invention and are explicitly related to a realisation of this invention that is presented as a non-limiting example thereof.
FIG. 1 shows a diagram of the functional layers of the BLE protocol that is implemented in the BLE method of communication, object of this invention.
FIG. 2 shows a diagram of a broadcast topology that is implemented in the BLE broadcast communication method object of this invention.
FIG. 3 shows a diagram of a packet exchange in a broadcast which is implemented in the BLE method of communication, object of this invention.

### DETAILED EXPLANATION OF ONE MODE OF REALISATION OF THE INVENTION

As can be seen in FIG. 1, the generic access profile (GAP) defines how the devices interact with each other. This is at the top level of the BLE stack, because it specifies device roles, modalities and procedures for device and service discovery, connection-setting management, and security. The GAP defines four roles for devices: broadcaster, observer, peripheral and central. Based on these roles you can have two possible scenarios.

The first scenario, in which the devices -nodes- do not connect is called broadcasting, where each node is always in "broadcast" or "observer" mode. In the second scenario, the devices -nodes- create a connection and establish a bidirectional transfer of data ("connection" mode). However, the purpose of this invention is related to broadcast mode.

Figure 2 shows an example with three devices -nodes- in broadcast mode, in such a way that at least one node will be a broadcaster and the other nodes will be observers that will be the devices that use the data broadcasted by the broadcasting node, but without communicating with it, so it is a one-to-many communication; i.e., any that is listening.

As previously indicated, in environments very saturated with BLE devices, for example in home automation applications where each node is a controller of a physical device, such as a plug, the television, the fridge or the oven, it is necessary to establish a mechanism to ensure the receipt of the message in the recipient node. In the current state of the art, MAC filtering is used by establishing a whitelist of allowed MAC addresses that logically limit the possible number of devices -nodes- connected.

This invention discards the use of whitelists of acceptable MAC devices and implements a filter with the MAC address itself. So, each one of the nodes (A, B or C) of the network shown in figure 2 only accepts, exclusively and in a limited sense, the packets that their own MAC address identifies. Thus, as an example, the device -node- broadcasts in broadcast advertising packets they include, not its own Mac, but also the MAC address of the recipient, i.e. the MAC address of the device - node- B, which after scanning the advertising channels in its range, receives it and processes it. Conversely, in certain claims, the device -node- B reaches the role of broadcaster, repeating the process of sending a data packet with the MAC of the device -node- A, so that device A, by filtering the scanned packets, only receives and processes, exclusively, those packets that incorporate their own MAC address.

Note that the data packet that is encrypted in the BLE message includes a source identifier and a target identifier, both 4 bytes. The BLE message is broadcast with the MAC of the target device.

When a C device -node- sends a packet to node A, with the MAC address of node A, and this packet passes through the scan action range of node B, it rejects the packet, not interfering with the communication between nodes A or C, repeating the data packet and thus increasing the data packet range.

In other words, the MACs of the devices are a derivation of their internal ID along with a base MAC address. Node A knows the ID of node B to which the package is to be sent and node B receives the ID of node A within the encrypted packet received. The source device A sends the same packet repeatedly spaced in a pre-established period of time. During that period, it receives a response from the target device B to send more repetitions of the message. The target device B might receive the first packet sent, or the repeated packet N.

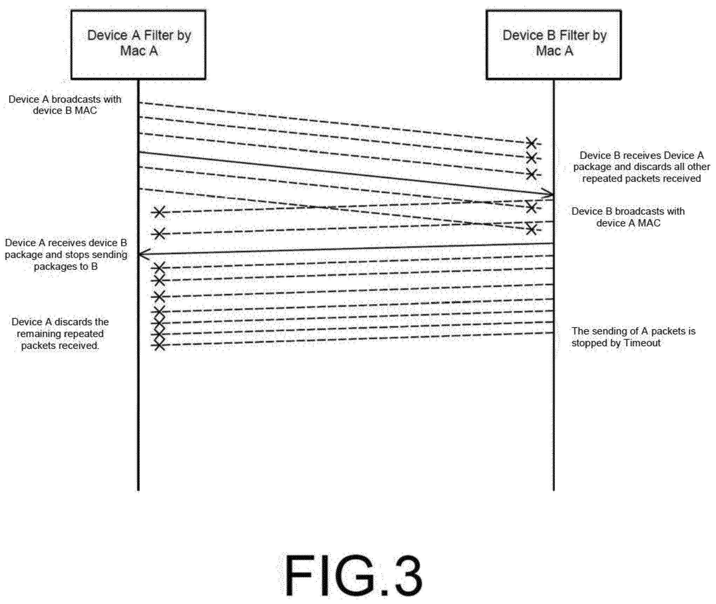

In figure 3 the device -node- A is shown. It implements a filter by the MAC A (i.e. it only accepts packets that incorporate their own MAC address) and broadcasts a first burst of packets equal to the MAC of the B device, so that the device B receives a first packet of the device -node- A and rejects the rest of the repeated packets.

Next the device -node- B broadcasts a second burst of equal -identical packets-that include the MAC of the device -node- A. When device A receives the first package that includes its own MAC, packets are no longer sent to device B and, in turn, it discards the rest of the data packets received from B and which are also repeated. Device B eventually stops sending repeated packets to device A when a pre-set time period for a timer ends.

Finally, it should be pointed out that the standard package contains a payload of 31 bytes that are used, not only to include the recipient's MAC, but that include data describing the broadcaster and its capacity, in addition to any other custom information to be transmitted to other nodes. Additionally, the BLE protocol supports an optional secondary payload, called "scan-response" that allows observers who detect a broadcast to request a second frame with an additional payload of 31 bytes, for a maximum of 62 bytes in total.

## Claims

1. A method of communication by means of a BLE protocol broadcasted and filtered by MAC on a network under the BLE protocol with at least a first node (A) and at least a second node (B) where the first node (A) broadcasts at least one data packet that includes at least one MAC address of at least one second node (B); and where when the second node (B) in an advertising channel scans that data packet broadcasted; it processes it if and only if the data packet received contains its own MAC address; and where the method is characterised because the first node (a) broadcasts a first burst of data packets that include the MAC address of at least one second node (B) so that the second node (B) receives a first packet from the first node (A) and rejects the this from repeated and equal data packets; and where then the second node (B) broadcasts a second burst of identical packets of data among themselves that include the MAC address of the first node (A), ceasing to send packets to the second node (B) and, in turn, discarding the rest of the packets received from the second node (B) and which are repeated; and where the second node (B) stops sending repeated packets of data to the first node (A) when a pre-set time period for a timer ends.

2. The method of claim 1 wherein if a receiving node (A, B, C) receives a data packet on an advertising channel with a MAC address other than its own, it repeats the data packet to other nodes (A, B, B) within its range.
